# EUROPÄISCHE PATENTSCHRIFT

(11) **EP 0 619 452 B1**
(45) Veröffentlichungstag und Bekanntmachung des Hinweises auf die Patenterteilung: **02.07.1997**
(21) Anmeldenummer: 94104738.3
(22) Anmeldetag: 24.03.1994
(51) Int. Cl.: F16L 59/04, F25D 23/06

(54) **Gerät mit pulver-vakuumisolierten Wandungen**
Apparatus with powder-vacuum insulated walls
Appareil comportant des parois isolées avec poudre sous vide

(30) Priorität: 07.04.1993 DE 4311510
(43) Veröffentlichungstag der Anmeldung: 12.10.1994
(73) Patentinhaber: Bosch-Siemens Hausgeräte GmbH, 81669 München (DE)
(72) Erfinder: Maier, Roland, Dipl.-Ing. (FH), D-73450 Neresheim (DE); Färber, Karlheinz, Dipl.-Ing. (FH), D-89537 Giengen (DE); Haftlmeier, Theo, D-89537 Giengen (DE)

(56) Entgegenhaltungen:
- EP-A- 0 017 095
- EP-A- 0 260 699
- US-A- 2 164 143

## Beschreibung

Die vorliegende Erfindung bezieht sich auf ein Gerät mit thermisch von der Umgebung isolierten Innenraum, insbesondere auf ein Kühl- und/oder Gefriergerät unter Verwendung von pulver-vakuumisolierenden Wandungen, und auf Verfahren zur Herstellung des gerätes.

Thermische Isolationen werden gemäß dem bekannten Stand der Technik realisiert durch verschiedenste Maßnahmen, wobei unter anderem Pulver-Vakuumisolationen, insbesondere wegen deren Einschätzung als weitestgehend für die Umwelt - insbesondere bei der Entsorgung - unbedenklich erscheinenden Eigenschaften zunehmend an Bedeutung gewinnen. Insbesondere können derartige Isolationen für die Wandungen von Kühl- und/oder Gefriergersten als Ersatz für die verbreitet zum Einsatz gebrachten Hartschaum-Isolierungen dienen. So ist es beispielsweise bekannt, für Kühl- oder Kältegerate Vakuumisolations-Panels (sogannte VIP) herzustellen und zu verwenden, die aus einer Schicht eines gasdicht insbesondere durch eine Folie nach außen abgedichteten Pulvers, beispielsweise Siliziumoxid- oder Perlit-Pulvers, welches gasevakuiert ist, bestehen. Die einzelnen Vakuumisolations-Panels werden üblicherweise durch Hartschaum-Auskleidungen, insbesondere in den Ecken- und Kantenbereichen ergänzt und miteinander verbunden. Das an sich sehr gute Wärmeisolations-Verhalten bei Verwendung der Pulver-Vakuumisolationen wird dadurch nachteilig beeinträchtigt und der Herstellungsaufwand wird aufgrund der unterschiedlichen Techniken erhöht. Derartige Material-Verbund-Techniken stellen auch für die Entsorgung möglichst zu vermeidende nachteilige Voraussetzungen dar.

Aus der EP-A-0 260 699 ist ein gattungsgemäßes gerät bekannt, bei dem der Zwischenraum zwischen dem Innen - und dem Außenbehälter vollständig mit einem wörmeisolierenden Pulver ausgefüllt ist, das evakuiert und verdichtet ist.

Der vorliegenden Erfindung liegt deshalb die Aufgabe zugrunde, ein Gerät mit pulver-vakuumisolierenden Wandungen, insbesondere für den Haushaltsbereich als Kühl- und/oder Gefriergerät bereitzustellen, das sowohl aufbautechnisch als auch warmeisolationstechnisch einfach und effizient ist und auch im Hinblick auf die Entsorgung günstige Voraussetzungen bietet.

Ein Gerät, das diesen Anforderungen genügt, ist erfindungsgemäß dadurch gekennzeichnet, daß die Gehäusewandungen gebildet sind aus einem festen Verbund aus einen Außenbehälter, einem Innenbehälter und einer dagegen durch gasdichte und gasdicht verbundene Folienschichten abgedichteten, gasevakuierten, zusammenhängenden verdichteten Pulvereinbettung.

Ein nach diesen Merkmalen ausgestattetes Gerät enthält als wärmeisolierendes Dämm-Mittel im wesentlichen ausschließlich und durchgehend die gasevakuierte, zusammenhängende Pulvereinbettung. Durch die Gasevakuierung und den festen Verbund mit dem Innen- und dem Außenbehälter wird auch ein im wesentlichen eigensteifes Gehäuse gebildet. Durch das somit auch über die Kantenbereiche von Wandung zu Wandung übergreifende und übergeführte Vakuum erfährt das üblicherweise fünfseitige Gehäuse - die sechste Seite wird durch eine Türkonstruktion verschlossen - eine besonders gute Eigensteifigkeit.

Nach einer Variante des erfindungsgemäßen Gehäuses steht die evakuierte Pulvereinbettung der einzelnen Wandungen des Gerates mit lediglich einer der Pulvereinbettungen der benachbarten Wandung zusammenhängend in Verbindung, und zwar bevorzugt dahingehend, daß an die zentral liegende Wandung sternförmig sich die vier weiteren Wandungen anschließen. Damit wird die Möglichkeit eröffnet, ein Pulver-Panel eben als Abwicklung der Seiten mit Kanteneinprägungen vorzufertigen, wobei diese Vorfertigung die Gasevakuierung bereits einschließen kann.

Nach einer bevorzugten Ausgestaltung sind die Kunststoff-Folien feste Bestandteile der der Pulvereinbettung zugewandten Seite des Innenbehälters und/oder des Außenbehälters, wobei diese Kunstoff-Folien beispielsweise auf das Innen- bzw. Außenbehälter-Material aufgewalzt ist. Damit ergeben sich für die Herstellung des Geräts eine günstige Ausgangssituation und für das Gerät selbst günstige Stabilitätseigenschaften, da die Gasevakuierung der Pulvereinbettung sich direkt auf den Innenbehälter und den Außenbehälter auswirkt.

Eine ähnliche Situation wird nach einer anderen Weiterbildung der Erfindung auch damit geschaffen, daß die Kunststoff-Folien mit den der Pulvereinbettung zugewandten Seiten des Innenbehälters und/oder des Außenbehälters zumindest partiell verklebt sind.

Eine zusätzliche Steifigkeit kann dadurch erzielt werden, daß die Randbereiche des Innenbenälters und des Außenbehälters miteinander fest verbunden sind. Bei einem gemäß der Erfindung vorgeschlagenen Verbund der gasevakuierten Pulvereinbettungen zur Wärmeisolation bietet es sich an, eine Unterdruck-Meßeinrichtung mit einer unter Druckabfall-Signaleinrichtung anzuschließen. Bei signalisiertem Abfall des Unterdrucks kann durch entsprechend vorgesehene Maßnahmen die Pulvereinbettung gas-nachevakuiert werden, so daß die ursprünglich angestrebten und erzielten Wärmeisolations-Eigenschaften wieder hergestellt werden können.

Geräte mit pulver-vakuumisolierten Wandungen gemäß der vorliegenden Erfindung können bevorzugt dergestalt hergestellt werden, daß in einen in eine Preßform eingelegten Außenbehälter mit aufgebrachter oder eingelegter gasdichter Kunststoff-Folie Pulver eingebracht wird und durch den auf einen Druckstempel aufgebrachten und mit einer Kunststoff-Folie überzogenen Innenbehälter formgebend verdichtet wird, und daß die verdichtete Pulvereinbettung anschließend gasevakuiert und die Kunststoff-Folien gasdicht verschweißt werden.

Für das Herstellungsverfahren kann es sich als zweckmäßig erweisen, daß nach dem Einbringen des Innenbehälters in den Außenbehälter die Seitenbereiche mit Pulver nachgeschüttet und mit Druckstempeln zusammen mit und/oder anschließend zum Verdichten des ursprünglich in den untenliegenden Bereich eingebrachten Pulvers verdichtet werden.

Anhand der Zeichnung werden Ausführungsformen gemäß der Erfindung im folgenden schematisiert und beispielshaft erläutert. Es zeigen:

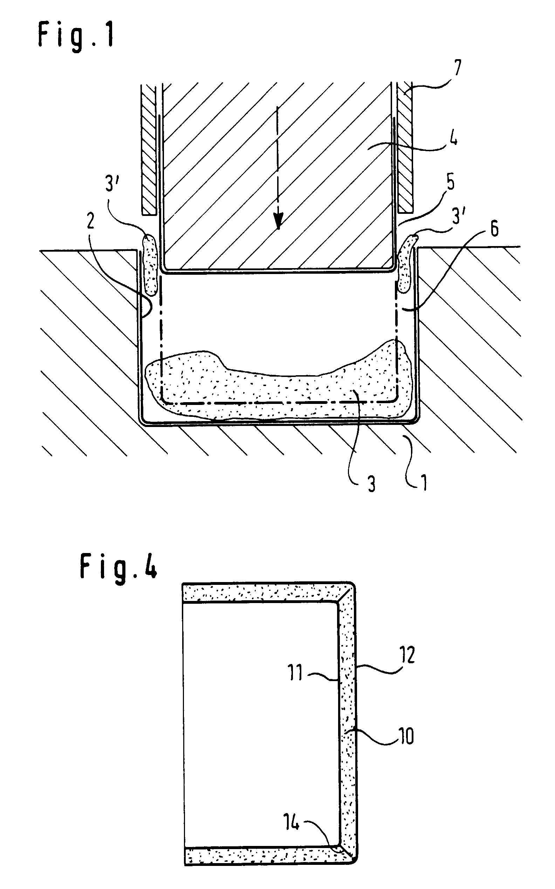

- Fig. 1: einen Schnitt durch eine Anordnung für das Herstellungsverfahren eines erfindungsgemäßen Gehäuses,
- Fig. 2 und Fig. 3: ein vorgefertigtes, faltbares Panel und
- Fig. 4: ein derartiges Panel gefaltet und eingebracht zwischen einem Innen- und einem Außenbehälter für das Gehäuse.

In einer Außenform 1 ist ein Außenbehälter 2 eingelegt, in welchen Siliziumoxid-Pulver 3, eingebettet in ein Vlies, eingebracht wird. Dieses Vlies ist in der Lage, das Pulver zurückzuhalten, während es gasdurchlässig ist. Durch das Vlies ist es möglich, das Pulver zu verdichten, ohne daß das Pulver entweicht. Über einen Stempel 4 ist ein Innengehäuse 5 gestülpt. Dieses wird unter rüttelndem Druck nach unten bewegt, so daß das eingebrachte Pulver 3 geformt und gepreßt wird. Die Verdichtung des Pulvers 3 ist üblicherweise derart, daß das ursprüngliche Volumen des Pulvers unter die Hälfte komprimiert wird. Auch in den Seitenbereichen 6 bildet sich eine Pulversäule aus. Für den Fall, daß diese Pulversäulen in den Seitenbereichen nicht durch das ursprünglich eingebrachte Pulver 3 sich ausreichend hoch ausbilden, kann seitlich zusätzlich Pulver 3' unter Umständen in einem Vlies eingebettet nachgebracht werden. Weitere Stempel 7, die unabhängig vom Stempel 4 steuerbar sind, dienen zur Verdichtung des Pulvers in den seitlich aufsteigenden Bereichen.

Für das Ausführungsbeispiel wird davon ausgegangen, daß die der Pulvereinbettung zugewandten Seiten des Außenbehälters 2 und des Innenbehälters 5 gasdichte Kunststoff-Folien-Beschichtungen aufweisen. Die Randbereiche des Außenbehälters 2 und des Innenbenälters 5, zumindest jedoch deren Folienbeschichtungen werden bis auf eine Aussaugöffnung gasdicht miteinander verbunden, wonach der pulvergefüllte Raum gasevakuiert wird. Nachdem auch die Aussaugöffnung gasdicht verschlossen wird, bilden Innenwandung 2, Außenwandung 5 und gasevakuierter Pulverbereich ein im wesentlichen formstabiles, einseitig offenes Gehäuse mit guten Wärmeisolier-Eigenschaften.

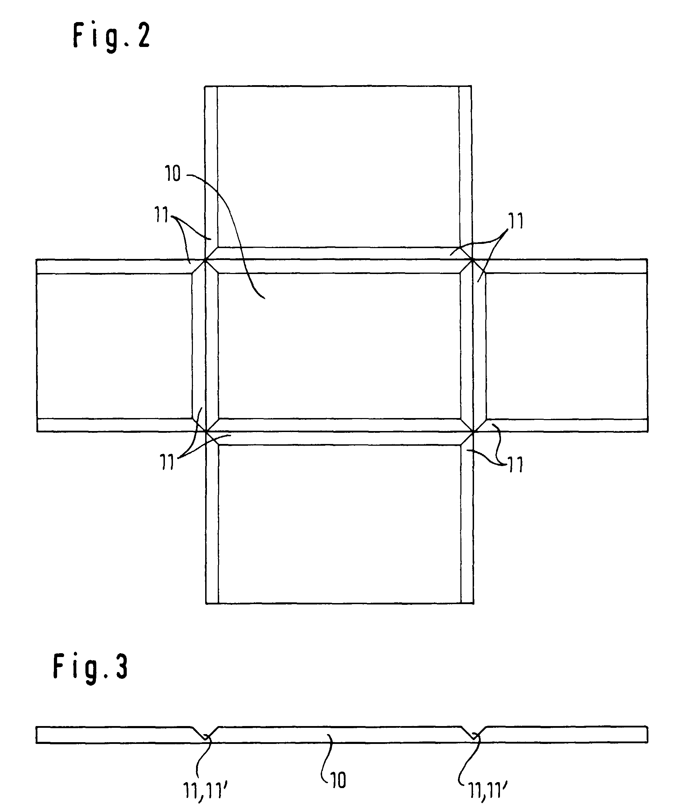

Die Figuren 2 und 3 zeigen ein vorfertigbares, ebenes Panel 10 aus zwischen gasdichten Kunststoff-Folien eingebrachtem und weitestgehend vorgepreßtem Pulver. Die Kantbereiche sind entsprechend mit V-förmigen Sicken 11 und nach außen abfallenden Abschrägungen 11' in Winkeln von ca. 45° versehen, so daß die einzelnen Seiten entsprechend zu einem einseitig offenen Kubus gefaltet werden können. Im endgültigen Zustand liegen diese zusammenhängenden und gefalteten Pulverwandungen zwischen einem Innenbehälter 12 und einem Außenbehälter 13, wobei die Folien zweckmäßigerweise an deren Wandungen festgeklebt sind. Beim Einbringen zwischen den Außenbehälter 13 und den Innenbehälter 12 werden auch die Stoßbereiche 14 sich anformend aneinander stoßfrei anlegen, wobei durch eine erst dann stattfindende Gasevakuierung die Gesamtfestigkeit der Anordnung endgültig hergestellt wird.

Die Figur 4 zeigt ein derart gefaltetes Panel 10 zwischen einem Innenbehälter 12 und einem Außenbehälter 13.

## Patentansprüche

1. Gerät mit thermisch von der Umgebung isoliertem Innenraum, insbesondere Kühl- und/oder Gefriergerät unter Verwendung von pulver-vakuumisolierten Wandungen, **dadurch gekennzeichnet**,
daß die Gehäusewandungen gebildet sind aus einem festen Verbund aus einem Außenbehälter, einem Innenbehälter und einer dagegen durch gasdichte und gasdicht verbundene Folienschichten abgedichteten gasevakuierten zusammenhängenden verdichteten Pulvereinbettung.

2. Gerät nach Anspruch 1, dadurch gekennzeichnet, daß die evakuierte Pulvereinbettung der einzelnen Wandungen des Geräts mit lediglich einer der Pulvereinbettung benachbarten Wandungen zusammenhängend in Verbindung steht.

3. Gerät nach Anspruch 1, dadurch gekennzeichnet, daß die Kunststoff-Folien feste Bestandteile der der Pulvereinbettung zugewandten Seiten des Innenbehälters und/oder des Außenbehälters sind.

4. Gerät nach Anspruch 1 oder 2, dadurch gekennzeichnet, daß die Kunststoff-Folien mit den der Pulvereinbettung zugewandten Seiten des Innenbehälters und/oder des Außenbehälters zumindest partiell verklebt sind.

5. Gerät nach Anspruch 1 bis 4, dadurch gekennzeichnet, daß die Randbereiche des Innenbehälters und des Außenbehälters miteinander verbunden sind.

6. Gerät nach einem der Ansprüche 1 bis 5, dadurch gekennzeichnet, daß an die evakuierte Pulvereinbettung eine Unterdruck-Meßeinrichtung mit Unterdruckabfall-Signaleinrichtung angeschlossen ist.

7. Herstellungsverfahren für ein Gerät nach einem der Ansprüche 1-6, dadurch gekennzeichnet, daß in einen in eine Preßform eingelegter Außenbehälter mit aufgebrachter oder eingelegter gasdichter Kunststoff-Folie Pulver eingebracht wird und durch den auf einem Druckstempel aufgebrachten und mit einer Kunststoff-Folie überzogenen Innenbehälter formgebend verdichtet wird und daß die verdichtete Pulvereinbettung anschleißend gasevakuiert und die Kunststoff-Folien gasdicht verschweißt werden.

8. Herstellungsverfahren nach Anspruch 7, dadurch gekennzeichnet, daß nach dem Einhängen des Innenbehälters in den Außenbehälter die Seitenbereiche mit Pulver nachgeschüttet und mit Druckstempeln zusammen mit und/oder anschließend zum Verdichten des ursprünglich in den untenliegenden Bereich eingebrachten Pulvers verdichtet wurden.

9. Herstellungsverfahren für ein Gerät nach einem der Ansprüche 1-6, dadurch gekennzeichnet, daß die Pulvereinbettung zwischen Folien mit in einer Ebene aufgefalteten, zusammenhängenden Seitenwandungen mit Kantfalteinschnürungen vorgefertigt und vorverdichtet sind und gefaltet auf den Innenbehälter aufgebracht bzw. in den Außenbehälter eingelegt wird und durch den Innen- bzw. Außenbehälter ergänzt wird.

10. Herstellungsverfahren nach Anspruch 9, dadurch gekennzeichnet, daß eine Endverdichtung und eine Gasevakuierung der Pulvereinbettung bei bzw. nach dem Zusammenfügen von Innen- und Außenbehälter erfolgt.

## Claims

1. Appliance with an interior space insulated thermally from the surroundings, in particular cooling and/or freezing appliance with the use of powder-vacuum-insulated walls, characterised thereby, that the housing walls are formed of a firm composite of an outer container, an inner container and a contiguous compacted powder embedding which is evacuated of gases and sealed off against the composite by gas-tight foil layers connected to be gas-tight.

2. Appliance according to claim 1, characterised thereby, that the evacuated powder embedding of the individual walls of the appliance stands in connection contiguously with merely one of the walls adjacent to the powder embedding.

3. Appliance according to claim 1, characterised thereby, that the synthetic material foils are firm components of those sides of the inner container and/or the outer container, which face the powder embedding.

4. Appliance according to claim 1 or 2, characterised thereby, that the synthetic material foils are at least partially adhesively connected with those sides of the inner container and/or the outer container, which face the powder embedding.

5. Appliance according to claim 1 to 4, characterised thereby, that the rim regions of the inner container and the outer container are connected together.

6. Appliance according to one of the claims 1 to 5, characterised thereby, that an underpressure-measuring equipment with underpressuredrop-signalling equipment is connected to the evacuated powder embedding.

7. Manufacturing method for an appliance according to one of the claims 1 to 6, characterised thereby, that powder is introduced into an outer container, which is laid into a press mould, with applied or inlaid gas-tight synthetic material foil and is compacted to shape by the inner container coated by a synthetic material foil and mounted on a press die and that the compacted powder embedding is subsequently evacuated of gases and the synthetic material foils are welded together to be gas-tight.

8. Manufacturing method according to claim 7, characterised thereby, that after the hanging of the inner container into the outer container, the side regions are replenished with powder and compacted by press dies together with and/or subsequently to the compaction of the powder originally introduced into the region lying below.

9. Manufacturing method for an appliance according to one of claims 1 to 6, characterised thereby that the powder embedding is preliminarily prepared and preliminarily compacted between foils with contiguous side walls, which are folded into one plane, with edge fold constrictions and is placed folded on the inner container or laid folded into the outer container and completed by the inner container or outer container, respectively.

10. Manufacturing method according to claim 9, characterised thereby that a final compaction and a gas evacuation of the powder embedding is carried out during or after the assembly of inner container and outer container.

## Revendications

1. Appareil comportant une chambre intérieure isolée thermiquement vis-à-vis de l'environnement, notamment réfrigérateur et/ou congélateur, avec des parois isolantes à base de poudre sous vide, caractérisé par le fait que les parois de l'appareil sont formées d'un assemblage rigide d'une cuve extérieure, d'une cuve intérieure et d'une garniture de poudre appliquée sur celles-ci, compactée et scellée sous vide au moyen de films étanches au gaz, qui sont liés entre eux de manière étanche au gaz.

2. Appareil selon la revendication 1, caractérisé par le fait que la garniture de poudre sous vide des différentes parois de l'appareil est liée seulement à l'une des parois voisines de ladite garniture de poudre.

3. Appareil selon la revendication 1, caractérisé par le fait que les films de matière plastique sont solidaires des faces de la cuve intérieure et/ou de la cuve extérieure tournées vers la garniture de poudre.

4. Appareil selon la revendication 1 ou 2, caractérisé par le fait que les films de matière plastique sont au moins partiellement collés aux faces de la cuve intérieure et/ou de la cuve extérieure tournées vers la garniture de poudre.

5. Appareil selon l'une des revendications 1 à 4, caractérisé par le fait que les régions des bords des cuves intérieure et extérieure sont liées entre elles.

6. Appareil selon l'une des revendications 1 à 5, caractérisé par le fait qu'un dispositif de mesure du vide avec un dispositif d'avertissement en cas de remontée de la pression est connecté à la garniture de poudre.

7. Procédé de fabrication pour un appareil selon l'une des revendications 1 à 6, caractérisé par le fait que, dans une cuve extérieure placée dans un moule et pourvue ou habillée d'un film de matière plastique étanche au gaz, on introduit de la poudre et on comprime celle-ci en la moulant à l'aide de la cuve intérieure montée sur un piston et recouverte d'un film de matière plastique et par le fait qu'ensuite on réalise le vide dans la garniture de poudre compactée et on soude de manière étanche au gaz les films de matière plastique.

8. Procédé de fabrication selon la revendication 7, caractérisé par le fait qu'après avoir positionné la cuve intérieure dans la cuve extérieure, on remplit les zones latérales avec de la poudre et on la comprime, en même temps et/ou consécutivement, à l'aide de pistons pour compacter la poudre appliquée dans la région qui était à l'origine en-dessous.

9. Procédé de fabrication pour un appareil selon l'une des revendications 1 à 6, caractérisé par le fait que la garniture de poudre est préfabriquée et précompactée entre des films, avec des parois latérales qui sont liées entre elles, sont dépliées dans un plan et sont pourvues d'un rainage et que la garniture est appliquée sous une forme pliée sur la cuve intérieure ou dans la cuve extérieure et est complétée par la cuve extérieure ou la cuve intérieure.

10. Procédé de fabrication selon la revendication 9, caractérisé par le fait que l'on procède à un compression finale et à mise sous vide de la poudre lors de ou après l'assemblage de la cuve intérieure et de la cuve extérieure.
